# EUROPEAN PATENT APPLICATION

(11) **EP 4 814 722 A1**
(43) Date of publication of application: **30.09.2026**
(21) Application number: 24894472.0
(22) Date of filing: 07.11.2024
(51) Int. Cl.: G06F 11/10

(54) **MEMORY MANAGEMENT METHOD AND APPARATUS HAVING VALIDATION FUNCTION**

(30) Priority: 22.11.2023 KR 20230163224; 08.10.2024 KR 20240136818
(71) Applicant: LX Semicon Co., Ltd., Daejeon 34027 (KR)
(72) Inventor: BAE, Jung Yang, Daejeon 34027 (KR)
(74) Representative: Ter Meer und Partner mbB
(86) International application number: PCT/KR2024/017477
(87) International publication number: WO 2025/110579

(57) **Abstract**

The present invention relates to a memory management method and apparatus having a validation function, wherein an intermediate checksum is stored in a first non-volatile memory along with a portion of code, and a final checksum for the entire code stored divided between the first non-volatile memory and a second non-volatile memory is stored in the second non-volatile memory along with the remainder of the code.

## Description

### TECHNICAL FIELD

The present invention relates to a memory management method and apparatus that is applicable to an embedded system.

### BACKGROUND ART

An embedded system is a computer system implemented to perform a specific function by embedding software (or program code) in hardware. In the embedded system, a checksum may be used when writing or reading code to or from the memory to verify the integrity of the software code.

An example of a typical cyclic checksum is as follows. First, when four bytes of data are given as 0x25, 0x62, 0x3F, and 0x52, adding all of the data results in 0x118. Subsequently, 0x18 is obtained by discarding a carry nibble, and 0xE8, which is a checksum byte, is obtained by taking a two's complement of 0x18 in a third step. In order to test the checksum byte, adding all of the bytes of the original group and the checksum byte yields 0x25 + 0x62 + 0x3F + 0x52 + 0xE8 = 0x200. Again, discarding the carry nibble results in 0x00. The 0x00 means that there is no error in the byte data.

In an embedded system, the checksum is calculated before storing code in a non-volatile memory, and the calculated checksum is stored at the last address of the memory, so that whenever power is supplied to the embedded system, a process of calculating the checksum is repeated for an amount corresponding to a size of the program code stored in the memory when a microcontroller unit (MCU) of the embedded system starts reading the code. Assuming a memory having N addresses, the checksum calculation is completed only after N additions and discarding of carry nibbles are performed, and when this is converted into clocks, a calculation time of N clocks is required. In the MCU with a slow clock frequency, a long time is consumed in the checksum calculation before the software (or application program code) starts to be executed, thereby delaying a validity check time of the code. The embedded system typically has one checksum corresponding to the code stored in the non-volatile memory.

### DISCLOSURE

### TECHNICAL PROBLEM

The present invention provides a memory management method and apparatus capable of increasing a validity check speed for the code stored in the non-volatile memory in the embedded system.

### TECHNICAL SOLUTION

A memory management method according to one embodiment of the present invention includes: storing an intermediate checksum together with a portion of code in a first non-volatile memory; storing, in the second non-volatile memory, a final checksum for the entire code divided and stored in the first non-volatile memory and a second non-volatile memory, together with a remaining portion of the code; and reading the intermediate checksum stored in the first non-volatile memory and accumulating a first checksum through real-time calculation in a process of reading the portion of the code stored in the first non-volatile memory, and accumulating a second checksum through real-time calculation using the intermediate checksum in a process of reading the remaining portion of the code stored in the second non-volatile memory.

The codes divided and stored in the first non-volatile memory and the second non-volatile memory may be simultaneously read through parallel processing, and at the same time, the first checksum and the second checksum may be accumulated in parallel through real-time calculation.

The second checksum may be accumulated from the first checksum.

The memory management method may further include: verifying the integrity of the portion of the code stored in the first non-volatile memory by comparing the intermediate checksum with the first checksum; and verifying the integrity of the entire code stored in the first non-volatile memory and the second non-volatile memory by comparing the final checksum with the second checksum.

The intermediate checksum and the first checksum may be compared simultaneously with a comparison of the final checksum and the second checksum.

The memory management method may further include: storing the intermediate checksum after the portion of the code is sequentially written to the first non-volatile memory; and storing the final checksum after the remaining portion of the code is sequentially written to the second non-volatile memory. The first checksum may be written as the intermediate checksum to the first non-volatile memory before the final checksum is written to the second non-volatile memory.

A memory management apparatus according to one embodiment of the present invention includes: a first non-volatile memory;

an N-th (N is a positive integer of 2 or more) non-volatile memory; and a central processing unit, a memory controller, a communication interface, and a volatile memory connected to the first non-volatile memory and the N-th non-volatile memory through a bus. The memory controller is configured to: when N is 2, store an intermediate checksum for a portion of code together with the portion of the code in the first non-volatile memory, and store a final checksum for the entire code stored in the first non-volatile memory and a second non-volatile memory together with a remaining portion of the code in the second non-volatile memory; and read the intermediate checksum from the first non-volatile memory and accumulate a first checksum through real-time calculation in a process in which the portion of the code stored in the first non-volatile memory is read, and accumulate a second checksum through real-time calculation in a process of reading the remaining portion of the code stored in the second non-volatile memory.

### EFFECT OF THE INVENTION

According to an embodiment of the present invention, the present invention can increase a validity check speed for the entire code stored in non-volatile memories by performing parallel processing in the non-volatile memories for a validity check that compares a checksum calculated in real time using intermediate checksums internally generated and stored during a storage step in the non-volatile memories in an embedded system. As a result, the present invention can improve an initial integrity check speed of a low-speed MCU, thereby improving an overall start-up speed of application software of the embedded system.

The effects of the present invention are not limited to the effects mentioned above, and other effects not mentioned herein will be clearly understood by those skilled in the art from the claims.

### BRIEF DESCRIPTION OF THE DRAWINGS

FIGS. 1 and 2 are diagrams showing a configuration of a memory management apparatus according to an embodiment of the present invention.
FIG. 3 is a flowchart showing a method for writing to a non-volatile memory according to an embodiment of the present invention.
FIG. 4 is a diagram showing in detail an example of a method for writing to the non-volatile memory when the non-volatile memory is partitioned into two.
FIG. 5 is a flowchart showing a method for reading from the non-volatile memory according to an embodiment of the present invention.
FIG. 6 is a diagram showing in detail an example of the method for reading from the non-volatile memory when the non-volatile memory is partitioned into two.

### BEST MODE FOR CARRYING OUT THE INVENTION

Advantages and features of the present invention, and implementation methods thereof will be clarified through the following embodiments described with reference to the accompanying drawings. However, the present invention is not limited to embodiments disclosed herein and may be implemented in various different forms. The embodiments are provided for making the disclosure of the prevention disclosure thorough and for fully conveying the scope of the present invention to those skilled in the art. It is to be noted that the scope of the present invention is defined by the claims.

The figures, dimensions, ratios, angles, numbers, and the like disclosed in the drawings for describing the embodiments of the present invention are merely illustrative and are not limited to matters shown in the present invention. Like reference numerals refer to like elements throughout. Further, in describing the present invention, detailed descriptions of well-known technologies will be omitted when it is determined that they may unnecessarily obscure the gist of the present invention.

The terms such as "comprising," "including," "having," and "consist of" used herein are generally intended to allow other components to be added unless the terms are used with the term "only." Any references to singular may include plural unless expressly stated otherwise.

Components are interpreted to include an ordinary error range even if not expressly stated.

When a positional or interconnected relationship is described between two components, such as "on top of," "above," "below," "next to," "connect or couple with," "crossing," "intersecting," or the like, one or more other components may be interposed between them, unless "immediately" or "directly" is used.

When a temporal antecedent relationship is described, such as "after", "following", "next to", "before", or the like, it may not be continuous on a time base unless "immediately" or "directly" is used.

The terms "first," "second," and the like may be used to distinguish elements from each other, but the functions or structures of the components are not limited by ordinal numbers or component names in front of the components.

The following embodiments can be partially or entirely bonded to or combined with each other and can be linked and operated in technically various ways. The embodiments can be carried out independently of or in association with each other.

Hereinafter, "code" includes an operating system (OS), an application program, and data that are storable in a memory. Here, the data includes setting data of peripheral devices connected internally and externally to and from an embedded system, user data, and the like.

Various embodiments of the present invention will be described in detail below with reference to the accompanying drawings.

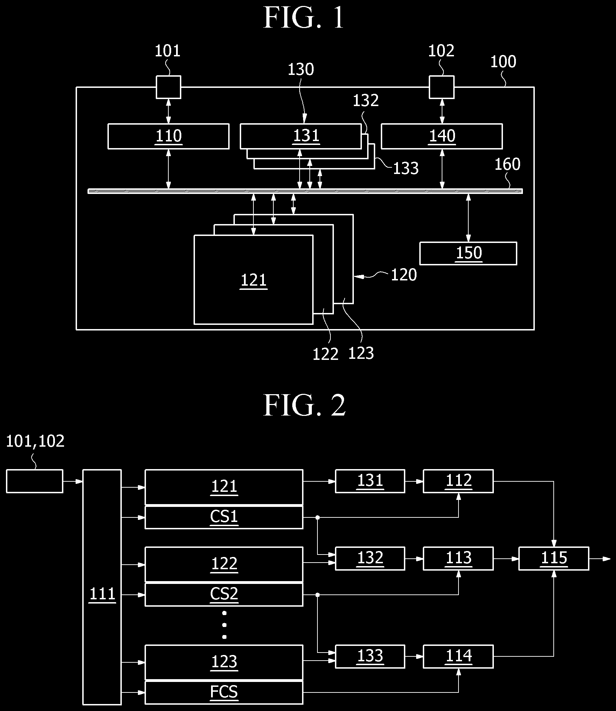

FIGS. 1 and 2 are diagrams showing a memory management apparatus according to an embodiment of the present invention. The memory management apparatus 100 may be a microcontroller unit (MCU) of the embedded system.

Referring to FIGS. 1 and 2, the memory management apparatus 100 includes a central processing unit (hereinafter, referred to as a "CPU") 110, a non-volatile memory 120, a memory controller 130, a communication interface 140, a volatile memory 150, and a bus 160 providing a signal transmission path by connecting the components 110 to 150 of the memory management apparatus 100.

The CPU 110 processes execution of an application program written in code stored in the non-volatile memory 120, processes commands, and performs operations. The communication interface 140 supports standard interfaces for data communication between external peripheral devices and the memory management apparatus 100, for example, serial communication interfaces such as a universal asynchronous receiver/transmitter (UART), a serial peripheral interface (SPI), an I2C, a universal serial bus (USB), and the like. The volatile memory 150 may include a memory for temporarily storing data, for example, a static random access memory (SRAM).

The memory management apparatus 100 includes first and second pins 101 and 102 through which code or data is input/output. The first pin 102 may be a joint test action group (JTAG) pin. The first pin 102 provides code to the CPU 110 during debugging, program upload (flash programming), board testing, inter-chip testing, and the like. The second pin 102 may be a communication interface pin connected to a peripheral device. Code to be stored in the non-volatile memory 120 and a final checksum for the entire code may be received through the pins 101 and 102, or data read from the non-volatile memory 120 may be transmitted to an external peripheral device. As an example of the checksum, a cyclic redundancy check (CRC) may be used, but is not limited thereto.

The non-volatile memory 120 may be a flash memory, an EEPROM, or the like, but is not limited thereto. In the non-volatile memory 120, code is divided and stored, and an intermediate checksum and a final checksum for the divided code are stored. The non-volatile memory 120 may be partitioned into N (N is a positive integer of 2 or more) or more memories in which writing (Write) and reading (Read) are distinguished in a software manner or in a hardware manner. The software manner may partition the non-volatile memory for reading and writing code into N memories. When N is 2, code of a first data group corresponding to 1/2 of the entire code may be read from and written to a first memory area of the non-volatile memory, and code of a second data group corresponding to the remaining 1/2 may be read from and written to a second memory area of the non-volatile memory. The intermediate checksum is a value that allows verification of whether the code stored in each memory area has not been damaged when verifying the integrity of the code stored in each of the N non-volatile memories, and a validity check time may be minimized by performing parallel processing of a validity check for the integrity of the code while reading the code stored in the non-volatile memory. The hardware manner may divide the code into N physically separated non-volatile memories and read and write the code, and store the intermediate checksum in at least one (N-1) of the memories.

In a first non-volatile memory 121, together with the code of the first data group, an intermediate checksum for the code of the first data group, for example, a first checksum CS1, is generated and stored. In a second non-volatile memory 122, together with the code of the second data group, an accumulated intermediate checksum for the codes of the first and second data groups, for example, a second checksum, is generated and stored. In an N-th non-volatile memory 123, together with code of a third data group, a final checksum FCS for the entire code divided and stored in the first to N-th non-volatile memories 121, 122, and 123 is stored.

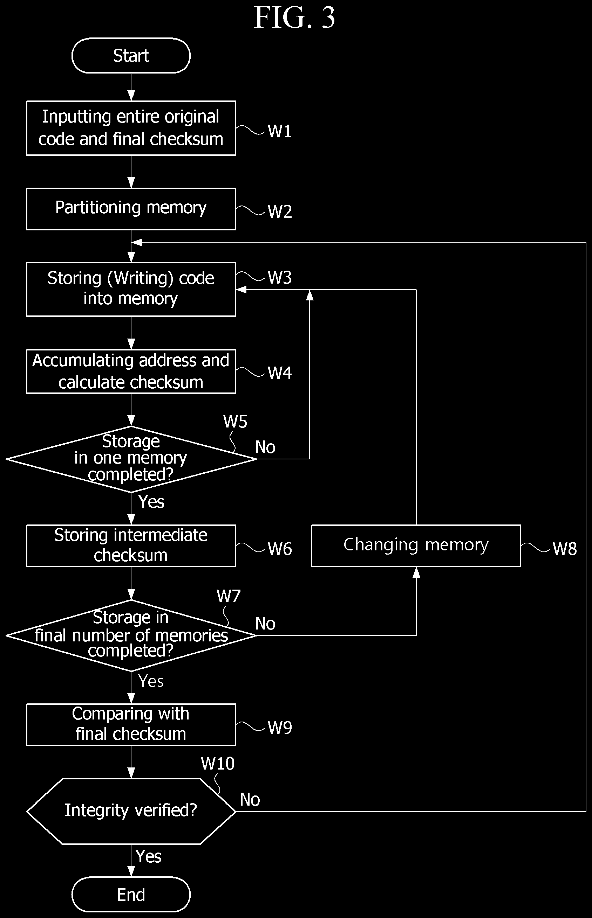

The memory controller 130 may control writing and reading of code to and from the non-volatile memory 120, and may calculate and generate the intermediate checksums CS1 and CS2 and the final checksum FCS. The memory controller 130 may perform memory reading/writing and checksum calculation by the memory management method shown in FIGS. 3 to 5. The final checksum FCS is a checksum for the entire code stored in the non-volatile memory 120. When the non-volatile memory 120 is a flash memory, the memory controller may include N flash program intellectual properties (IPs) and N checksum calculators 131 to 133 that individually handle the N partitioned non-volatile memories 121, 122, and 123. The N partitioned non-volatile memories may be interpreted as N memory cells included in the flash memory.

The memory management apparatus 100 further includes a memory selector 111 and a plurality of comparators 112 to 115 shown in FIG. 2. The memory selector 111 and the comparators 112 to 115 may be physical components controlled by the CPU 110 or the memory controller 130, or may be some functions of a program executed by the CPU 110 or the memory controller 130.

The memory selector 111 divides input original code into each memory area of the non-volatile memories 121, 122, and 123 and sequentially transmits the code to the non-volatile memories 121, 122, and 123. When the original code is divided into first to N-th data groups, the first data group may be stored in the first non-volatile memory 121, the second data group may be stored in the second non-volatile memory 122, and then the N-th data group may be stored in the N-th non-volatile memory 123.

When the original code is divided and stored in the first to N-th non-volatile memories 121, 122, and 123, an intermediate checksum is calculated for each memory. For example, when the code of the first data group is written to and stored in the first non-volatile memory 121, the first checksum calculator 131 calculates a first checksum for the code of the first data group in real time. When the code of the second data group is written to and stored in the second non-volatile memory 122, the second checksum calculator 132 calculates a second checksum in real time as an accumulated value for the combined code in which the first and second data groups stored in the first and second non-volatile memories 122 are combined. When the code of the N-th data group is written to and stored in the third non-volatile memory 123, the N-th checksum calculator 133 calculates a final checksum in real time as an accumulated value for the entire original code divided and stored in the first to N-th non-volatile memories 121, 122, and 123.

The first to N-th comparators 112, 113, and 114 may simultaneously compare, for each memory area of the non-volatile memories 121 to 123, intermediate checksums calculated in real time with the intermediate checksums read from the corresponding memories 121 to 123 among checksums stored in the non-volatile memories 121 to 123 through parallel processing, and may simultaneously output comparison results.

The first comparator 112 compares a real-time calculated value of a first checksum input from the first checksum calculator 131 with the first checksum CS1 read from the first non-volatile memory 121. The first comparator 112 outputs a first logic value indicating that code stored in the first non-volatile memory 121 is valid data when the first checksum CS1 read from the first non-volatile memory 121 is identical to the real-time calculated value of the first checksum, while outputting a second logic value when they are inconsistent (or different). The first logic value may be "1" (or high) and the second logic value may be "0" (or low), but are not limited thereto.

The second checksum calculator 132 calculates a second checksum using a value of the first checksum CS1 and a value stored in the second non-volatile memory 122. The second comparator 113 compares the second checksum input from the second checksum calculator 132 with the second checksum CS2 read from the second non-volatile memory 122. The second checksum output from the second checksum calculator 132 is an intermediate checksum calculated as an accumulated value for code in which the first and second data groups divided and stored in the first and second non-volatile memories 121 and 122 are combined. The second comparator 113 outputs the first logic value indicating that code stored in the second non-volatile memory 122 is valid data when the second checksum CS2 read from the second non-volatile memory 122 is identical to a real-time calculated value of the second checksum input from the second checksum calculator 132, while outputting the second logic value when they are inconsistent (or different).

The N-th comparator 114 compares a final checksum input from the N-th checksum calculator 133 with the final checksum FCS read from the N-th non-volatile memory 123. The N-th comparator 114 outputs the first logic value indicating that code stored in the N-th non-volatile memory 123 is valid data when the final checksum FCS read from the N-th non-volatile memory 123 is identical to a real-time calculated value of the final checksum input from the N-th checksum calculator 133, while outputting the second logic value when they are inconsistent (or different).

The output signals of the first to N-th comparators 112, 113, and 114 may be simultaneously input to a final comparator 115. The final comparator 115 outputs the first logic value indicating that the entire code stored in the first to N-th non-volatile memories 121, 122, and 123 is valid data without defects when the output signals of the first to N-th comparators 112, 113, and 114 are all equal to the first logic value. In contrast, the final comparator 115 outputs the second logic value indicating that there is a defect in the code read from the first to N-th non-volatile memories 121, 122, and 123 when at least one of the output signals of the first to N-th comparators 112, 113, and 114 is the second logic value. The output signal of the final comparator 115 may be transmitted to a component that has requested a data read from the non-volatile memories 121, 122, and 123.

FIG. 3 is a flowchart showing a method for writing to a non-volatile memory according to an embodiment of the present invention.

Referring to FIG. 3, the entire original code and a final checksum for the entire original code are input to the memory management apparatus 100 (W1).

The memory management apparatus 100 may partition the non-volatile memory into memories in which the original code is divided and stored (W2).

The memory management apparatus 100 may divide the original code by each memory area defined in the non-volatile memory and store the divided code. Each of the memory areas may be one non-volatile memory. The memory management apparatus 100 accumulates addresses of the non-volatile memory to which the code is written and calculates an intermediate checksum. A process of storing the divided code in one non-volatile memory and then storing an intermediate checksum for the divided code is repeated until the entire original code is stored in N non-volatile memories (W3 to W8). Accordingly, before the entire original code is stored in the non-volatile memories, one or more intermediate checksums may be calculated and stored in the corresponding non-volatile memories.

As the original code is completely stored in the N non-volatile memories, a final checksum calculated in real-time is compared with the input final checksum. The memory management apparatus 100 may verify that the code stored in the non-volatile memories has integrity without defects when the real-time calculated final checksum is identical to the input final checksum (W10). When the memory management apparatus 100 determines, based on a result of the final checksum comparison (W9 and W10), that the code stored in the non-volatile memories has a defect, the original code may be stored again in the non-volatile memories by repeating W3 to W10, and validity of the stored code may be checked.

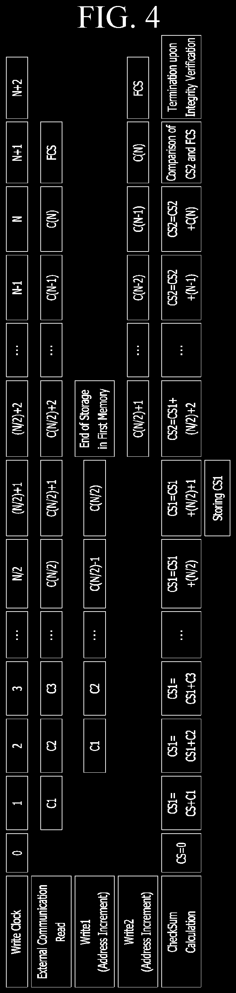

FIG. 4 is a diagram showing in detail an example of a method for writing to a non-volatile memory when the non-volatile memory is partitioned into two. The method for writing to the non-volatile memory may be a process of writing code to the memory when storing initial code during production of the embedded system or when updating code during use of the embedded system after product shipment, but is not limited thereto. In FIG. 4, "Write Clock" is a clock used when writing code to the non-volatile memory. "External Communication Read" represents a process in which code is serially input from the outside through the pins 101 and 102. When the non-volatile memory is divided into two, "Write 1" is a process in which code is written to a first non-volatile memory, and "Write 2" is a process in which code is written to a second non-volatile memory. In FIG. 4, "C1 to C(N)" are original code divided and stored in the first and second non-volatile memories. In this embodiment, it is assumed that checksums of the non-volatile memories are initialized to CS = 0 at a write clock "0".

Referring to FIG. 4, the original code received from the outside may start to be written to the first non-volatile memory 121 from a first write clock 1. At each write clock, a checksum may be accumulated when code is written to the first non-volatile memory.

For example, C1 is input at the first write clock 1 through the pins 101 and 102, and the first checksum CS1 is accumulated as CS1 = CS + C1. C2 is input at a second write clock 2 and C1 is written to the first non-volatile memory, and at the same time, the first checksum CS1 is accumulated to become CS1 = CS1 + C2. Subsequently, C3 is input at a third write clock 3 and C2 is written to the first non-volatile memory, and at the same time, the first checksum CS1 is accumulated to become CS1 = CS1 + C3. C(N/2) is input at an N/2 write clock N/2 while C(N/2)-1 is written to the first non-volatile memory, and at the same time, the first checksum CS1 is accumulated to become CS1 = CS1 + C(N/2). C(N/2)+1 is input at an (N/2)+1 write clock (N/2)+1 while C(N/2) is written to the first non-volatile memory, and at the same time, an accumulated value of the first checksum CS1, CS1 = CS1 + C(N/2)+1, is stored in the first non-volatile memory. The first checksum CS1 is an intermediate checksum used for a validity check of the code stored in the first non-volatile memory. After code corresponding to one half of the original code is stored in the first non-volatile memory in this way, the remaining one half of the code is sequentially stored in the second non-volatile memory.

C(N/2)+2 is input at an (N/2)+2 write clock (N/2)+2 while C(N/2)+1 is written to the second non-volatile memory, and at the same time, the second checksum CS2 starts to be accumulated to become CS2 = CS1 + C(N/2) + 2. Subsequently, C(N/2)+3 is input at an (N/2)+3 write clock omitted in the drawing while C(N/2)+2 is written to the second non-volatile memory, and at the same time, the second checksum CS2 is accumulated to become CS2 = CS2 + C(N/2) + 3. C(N-1) is input at an N-1 write clock N-1 while C(N-2) is written to the second non-volatile memory, and at the same time, the second checksum CS2 is accumulated to become CS2 = CS2 + C(N-1). C(N) is input at an N write clock N while C(N-1) is written to the second non-volatile memory, and at the same time, the second checksum CS2 is accumulated to become CS2 = CS2 + C(N).

At an N+1 write clock N+1, C(N) is written to the second non-volatile memory without additional input code, and at the same time, the final checksum FCS input to the memory management apparatus 100 together with the original code is compared with the second checksum CS2 accumulated by the real-time calculation at the comparator. After the final checksum FCS received with the original code is temporarily stored in the volatile memory 150, it may be compared with the second checksum CS2 at the N+1 write clock N+1. The integrity of the code divided and stored in the first and second non-volatile memories is verified when the accumulated second checksum CS2 is identical to the input final checksum FCS. In this case, the first logic value is output from the comparator and the checksum calculation may be terminated. When the second checksum CS2 is inconsistent with the final checksum FCS, the second logic value may be output from the comparator. The final checksum FCS may be stored in the second non-volatile memory at an N+2 write clock N+2.

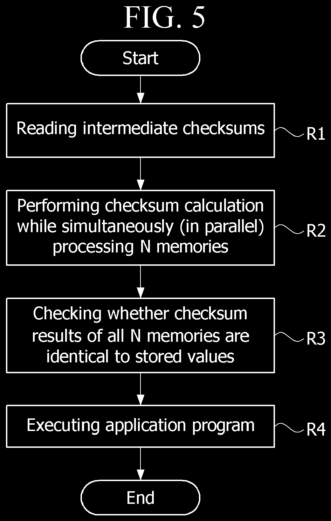

FIG. 5 is a flowchart showing a method for reading from a non-volatile memory according to an embodiment of the present invention.

Referring to FIG. 5, an application program written in code stored in N non-volatile memories may be executed by simultaneously reading the N non-volatile memories in the memory management apparatus 100 through parallel processing.

First, the memory management apparatus 100 reads intermediate checksums pre-stored in the non-volatile memories (R1). Subsequently, the memory management apparatus 100 calculates checksums by accumulating code values in real time while simultaneously reading the code stored in the N non-volatile memories (R2).

Subsequently, the memory management apparatus 100 performs a validity check for the entire code by simultaneously verifying the integrity of the code stored in the non-volatile memories by comparing the checksums calculated in real time for each of the N non-volatile memories with the pre-stored checksums (R3). When the integrity of the entire code stored in the non-volatile memories is verified, the application program written in the code may be executed (R4).

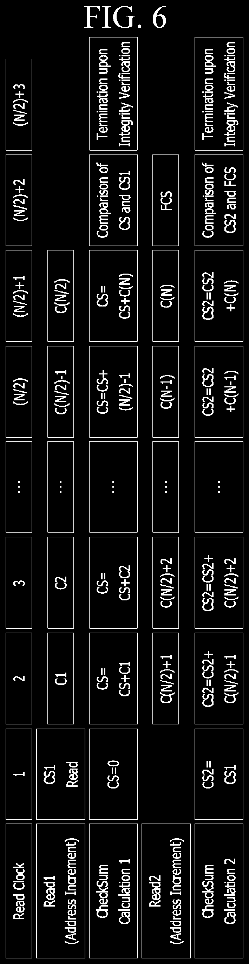

FIG. 6 is a diagram showing in detail an example of a method of reading from a non-volatile memory when the non-volatile memory is divided into two. In FIG. 4, "Read Clock" is a clock used when reading code from the non-volatile memory. When the non-volatile memory is partitioned into two, "Read 1" is a process in which code stored in the first non-volatile memory is read, and "Read 2" is a process in which code stored in the second non-volatile memory is read. In FIG. 4, "C1 to C(N)" are code divided and stored in the first and second non-volatile memories. "CheckSum Calculation 1" is an intermediate checksum calculation process calculated in real time when code stored in the first non-volatile memory is sequentially read. "CheckSum Calculation 2" is an intermediate checksum calculation process calculated in real time when code stored in the second non-volatile memory is sequentially read. The first and second non-volatile memories are accessed through parallel processing, and while code stored in these non-volatile memories is simultaneously read, intermediate checksums of each of the non-volatile memories are simultaneously calculated in real time.

Referring to FIG. 6, the memory management apparatus 100 first reads an intermediate checksum stored in the non-volatile memories, for example, the first checksum CS1 stored in the first non-volatile memory, at a first read clock 1. At the same time, whenever code is read, the first checksum CS1 calculated in real time is initialized to CS = 0, and the second checksum CS2 is initialized to the first checksum CS1 read from the first non-volatile memory (CS2 = CS1).

At a second read clock 2, while C1 is read from the first non-volatile memory, the first checksum CS calculated in real time is accumulated to become CS = CS + C1. At the second read clock 2, while C(N/2)+1 is read from the second non-volatile memory, the second checksum CS2 calculated in real time is accumulated to become CS2 = CS2 + C(N/2) + 1. At a third read clock 3, while C2 is read from the first non-volatile memory, the first checksum CS calculated in real time is accumulated to become CS = CS + C2. At the third read clock 3, while C(N/2)+2 is read from the second non-volatile memory, the second checksum CS2 calculated in real time is accumulated to become CS2 = CS2 + C(N/2) + 2.

At an N/2 read clock (N/2), while C(N/2)-1 is read from the first non-volatile memory, the first checksum CS calculated in real time is accumulated to become CS = CS + C(N/2) - 1. At the N/2 read clock (N/2), while C(N-1) is read from the second non-volatile memory, the second checksum CS2 calculated in real time is accumulated to become CS2 = CS2 + C(N-1). At an (N-2)+1 read clock ((N-2)+1), while C(N/2) is read from the first non-volatile memory, the first checksum CS calculated in real time is accumulated to become CS = CS + C(N/2). At the (N-2)+1 read clock ((N-2+1), while C(N) is read from the second non-volatile memory, the second checksum CS2 calculated in real time is accumulated to become CS2 = CS2 + C(N/2).

At an (N/2)+2 read clock (N/2)+2, the first checksum CS calculated in real time during the reading process is compared with the first checksum CS1 stored in the first non-volatile memory by the comparator. The integrity of the code stored in the first non-volatile memory is verified when the first checksum CS calculated in real time is identical to the first checksum stored in the first non-volatile memory. At the (N/2)+2 read clock (N/2)+2, the second checksum CS2 calculated in real time during the reading process is compared with the final checksum FCS stored in the second non-volatile memory by the comparator. The final checksum FCS is the final checksum for the entire original code. After the integrity of the entire code stored in the first and second non-volatile memories is verified when the second checksum CS2 calculated in real time is identical to the final checksum FCS stored in the second non-volatile memory, reading of the first and second non-volatile memories may be terminated at an (N/2)+3 read clock (N/2)+3. At the (N/2)+3 read clock (N/2)+3, the first logic value verifying the integrity of the entire code stored in the first and second non-volatile memories is output from the comparator, and a second logic value may be output from the comparator when the second checksum CS2 is not identical to the final checksum FCS.

The memory management apparatus according to the embodiments is applicable to embedded systems such as home appliances, automobiles, medical devices, communication systems, aviation and space systems, smart homes, and IoT devices.

Since the contents of the specification described in the problems to be solved, means for solving the problems, and effects do not specify essential features of the claims, the scope of the claims is not limited by the matters described in the contents of the specification.

Although the embodiments of the present invention have been described in detail with reference to the accompanying drawings, the present invention is not necessarily limited to these embodiments, and various modifications may be made within a range that does not depart from the technical spirit of the present invention. Accordingly, the embodiments disclosed in the present invention are not intended to limit the technical spirit of the present invention but to explain it, and the scope of the technical spirit of the present invention is not limited by these embodiments. Therefore, it should be understood that the embodiments described above are illustrative in all respects and not restrictive.

### MODE OF PRACTCING THE INVENTION

A memory management method according to an embodiment of the present invention includes storing an intermediate checksum together with a portion of code in a first non-volatile memory; storing a final checksum for the entire code divided and stored in the first non-volatile memory and a second non-volatile memory together with a remaining portion of the code in the second non-volatile memory; and reading the intermediate checksum stored in the first non-volatile memory and accumulating a first checksum through real-time calculation in a process of reading the portion of the code stored in the first non-volatile memory, and accumulating a second checksum through real-time calculation using the intermediate checksum in a process of reading the remaining portion of the code stored in the second non-volatile memory.

### INDUSTRIAL APPLICABILITY

An embedded system is a computer system implemented to perform a specific function by embedding software (or program code) in hardware. In the embedded system, a checksum may be used when writing code to or reading code from a memory in order to verify the integrity of the software code.

The memory management apparatus according to the embodiments is applicable to embedded systems such as home appliances, automobiles, medical devices, communication systems, aviation and space systems, smart homes, and IoT devices.

## Claims

1. A memory management method comprising:
storing an intermediate checksum together with a portion of code in a first non-volatile memory;
storing, in the second non-volatile memory, a final checksum for the entire code divided and stored in the first non-volatile memory and a second non-volatile memory, together with a remaining portion of the code; and
reading the intermediate checksum stored in the first non-volatile memory and accumulating a first checksum through real-time calculation in a process of reading the portion of the code stored in the first non-volatile memory, and accumulating a second checksum through real-time calculation using the intermediate checksum in a process of reading the remaining portion of the code stored in the second non-volatile memory.

2. The memory management method according to claim 1, wherein the codes divided and stored in the first non-volatile memory and the second non-volatile memory are simultaneously read through parallel processing, and at the same time, the first checksum and the second checksum are accumulated in parallel through real-time calculation.

3. The memory management method according to claim 2, wherein the second checksum is accumulated from the first checksum.

4. The memory management method according to claim 3, further comprising:
verifying the integrity of the portion of the code stored in the first non-volatile memory by comparing the intermediate checksum with the first checksum; and
verifying the integrity of the entire code stored in the first non-volatile memory and the second non-volatile memory by comparing the final checksum with the second checksum.

5. The memory management method according to claim 4, wherein the intermediate checksum and the first checksum are compared simultaneously with a comparison of the final checksum and the second checksum.

6. The memory management method according to claim 1, further comprising:
storing the intermediate checksum after the portion of the code is sequentially written to the first non-volatile memory; and
storing the final checksum after the remaining portion of the code is sequentially written to the second non-volatile memory,
wherein the first checksum is written as the intermediate checksum to the first non-volatile memory before the final checksum is written to the second non-volatile memory.

7. A memory management apparatus comprising:
a first non-volatile memory;
an N-th (N is a positive integer of 2 or more) non-volatile memory; and
a central processing unit, a memory controller, a communication interface, and a volatile memory connected to the first non-volatile memory and the N-th non-volatile memory through a bus,
wherein the memory controller is configured to:
when N is 2, store an intermediate checksum for a portion of code together with the portion of the code in the first non-volatile memory, and store a final checksum for the entire code stored in the first non-volatile memory and a second non-volatile memory together with a remaining portion of the code in the second non-volatile memory; and
read the intermediate checksum from the first non-volatile memory and accumulate a first checksum through real-time calculation in a process in which the portion of the code stored in the first non-volatile memory is read, and accumulate a second checksum through real-time calculation in a process of reading the remaining portion of the code stored in the second non-volatile memory.

8. The memory management apparatus according to claim 7, wherein the memory controller is configured to simultaneously read the code divided and stored in the first non-volatile memory and the second non-volatile memory through parallel processing, and at the same time, accumulate the first checksum and the second checksum through real-time calculation.

9. The memory management apparatus according to claim 7, wherein the second checksum is accumulated from the first checksum.

10. The memory management apparatus according to claim 9, wherein the memory controller is configured to:
verify the integrity of the portion of the code stored in the first non-volatile memory by comparing the intermediate checksum with the first checksum; and
verify the integrity of the entire code stored in the first non-volatile memory and the second non-volatile memory by comparing the final checksum with the second checksum.

11. The memory management apparatus according to claim 10, wherein the memory controller is configured to compare the final checksum with the second checksum simultaneously with comparing the intermediate checksum with the first checksum.

12. The memory management apparatus according to claim 7, wherein the memory controller is configured to:
store the intermediate checksum after sequentially storing the portion of the code in the first non-volatile memory; and
store the final checksum after sequentially storing the remaining portion of the code in the second non-volatile memory.
